# EUROPEAN PATENT APPLICATION

(11) **EP 1 300 232 A1**
(43) Date of publication of application: **09.04.2003**
(21) Application number: 02021568.7
(22) Date of filing: 26.09.2002
(51) Int. Cl.: B29C 45/27

(54) **Hot-runner - injector nozzle assembly for plastic material injection molds**

(30) Priority: 04.10.2001 IT TO20010939
(71) Applicant: Quaser S.r.L, 31040 Chiarano (Treviso) (IT)
(72) Inventor: Bazzo, Maurizio, 31010 Ormelle (Trevisio) (IT); Boscariol, Tiziano, 31040 Cessalto (Trevisio) (IT)
(74) Representative: Buzzi, Franco

(57) **Abstract**

Hot runner - injector nozzle assembly (1) for plastic material injection molds, wherein the hot runner body has a supply duct (4) of the plastic material to be injected ending in correspondence of a closure plane against which the tubular body (3) of the injector nozzle is arranged in a sealed contact fashion. The closure plane is defined by the base (10) of a substantially hemispherical annular rotula member (8) through which the hot runner body (2) and the injector nozzle body (3) are mutually coupled in an angularly orientable fashion.

## Description

The present invention is generally related to plastic material molding, and is more particularly related to a hot runner - injector nozzle assembly for plastic material injection molds.

According to the prior art, such as for instance disclosed in US-A-6030198, these assemblies include a hot runner body and a tubular injector nozzle body, and the hot runner body is formed with a supply duct of the plastic material to be injected, ending in correspondence of a closure plane against which the tubular body of the injector nozzle is arranged in a sealed contact fashion.

By this arrangement the closure plane between the hot runner body and the tubular body of the injector nozzle must be arranged perfectly planarly so as to ensure a constant fluid tightness in the area of mutual contact therebetween. Any even slight parallelism deviation may actually involve leakages of the fluid plastic material upon injection thereof into the mold, with the evident related consequences.

The object of the present invention is to eliminate such a risk, and to constantly ensure sealingness between the hot runner body and the injector nozzle body even whenever the surfaces of mutual contact thereof in correspondence of the closure plane are not perfectly parallel to each other, i.e. in case these surfaces mutually shift for any reason with respect to the condition of perfect parallelism.

According to the invention this object is achieved primarily by virtue of the fact that said closure plane is defined by the base of a substantially hemispherical annular rotula member through which said hot runner body and said injector nozzle body are sealingly coupled with each other in an angularly orientable fashion.

Due to this idea of solution the sealed contact between the hot runner body and the injector nozzle body is provided even if the respective mutually facing surfaces are not perfectly planar and parallel to each other, and also in case of any relative angular displacement between these surfaces.

The hemispherical design of the annular rotula member is also such that the sealed contact in the coupling area between the hot runner body and the injector nozzle body is further increased during operation by the pressure of the injected fluid plastic material itself.

Said annular rotula member is conveniently housed within a seat having a complementary hemispherical shape of the hot runner body, and more particularly within a bushing insert normally provided in the hot runner body and through which the supply duct of the plastic material to be injected is redirected axially with respect to the tubular body of the injector nozzle.

The invention will now be disclosed in detail with reference to the accompanying drawings, purely provided by way of non limiting example, in which:
- figure 1 is a diagrammatic and simplified vertically sectioned view of a hot runner - injector nozzle assembly for plastic material injection molds according to the invention,
- figure 2 shows in an enlarged scale a portion of figure 1, and
- figure 3 shows in an enlarged scale a detail of figure 2.

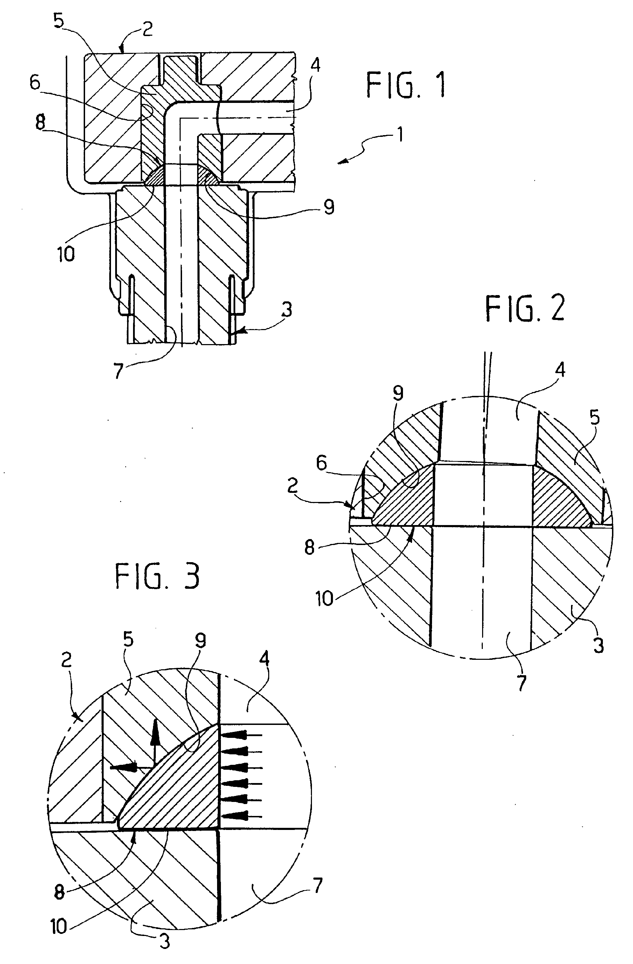

Referring initially to figure 1, reference numeral 1 generally designates an assembly according to the invention for plastic material injection molds, essentially comprising a hot runner body 2 and an injector nozzle having a tubular body designated as 3. Both the hot runner and the injector nozzle are of a generally conventional type and thus will not be disclosed in detail.

As far as the present invention is concerned it is sufficient to clarify that the hot runner body 2 has a supply duct 4 of the plastic material to be injected in a fluid state, which is redirected at a right angle towards the body 3 of the injector nozzle through a bushing insert 5 fitted within a corresponding seat 6 of the hot runner body 2.

The body 3 of the injector nozzle has an axial passage 7 for the plastic material to be injected, which is axially aligned with the portion of the supply duct 4 formed across the bushing insert 5.

Traditionally the end of the bushing insert 5 facing towards the injector nozzle body 3 and the surface of the injector nozzle body 3 facing towards the hot runner 2 are arranged parallelly to each other and define a closure plane intended to provide a sealed contact for the passage of the plastic material to be injected.

To the aim of enhancing such a sealed contact, i.e. in order to prevent any leakages even in case of the surfaces of mutual bearing between the hot runner body 2 and the injector nozzle body 3 are not perfectly parallel to each other, the invention provides an auxiliary seal means consisting of a substantially hemispherical annular member 8 shaped as a rotula, which is normally made of metal and whose provision ensures sealingness even if the mutually facing surfaces of the hot runner body 2, i.e. of the bushing insert 5, and of the injector nozzle body 3 form an angle there between instead of being perfectly parallel to each other.

Namely, the substantially hemispherical annular member 8 connects the hot runner body 2 and the injector nozzle body 3 in an angularly orientable sealed fashion. In the case of the shown example, this is achieved by virtue of the fact that the substantially hemispherical annular member 8 is housed within a seat 9 having a complementary hemispherical design of the bushing insert 5, with its base 10 projecting outside the bushing insert 5 and bearing against the surface of the injector nozzle body 3 facing towards it, coaxialy with the passage 7 of the latter.

By this arrangement the axis of the portion of the supply duct 4 formed across the bushing insert 5 can even be offset with respect to the axis of the passage 7 such as depicted in detail in figure 2, without negatively affecting sealingness in the contact area between the hot runner body 2 and the injector nozzle body 3, i.e. without any risk of undesired leakages of the plastic material during the injection molding process.

On the other hand, sealingness is instead further enhanced by the action of the pressure of the fluid plastic material applied against the inner wall of the substantially hemispherical annular member 8, and thus transmitted between the outer spherical surface thereof and the spherical wall of the complementary seat 9, such us shown in figure 3.
Naturally, the details of construction and the embodiments may widely vary with respect to what has been disclosed and illustrated, without thereby departing from the scope of the present invention such as defined in the appended claims. Thus for example, according to the a variant of the invention not shown in the drawing the substantially hemispherical annular member 8 may be housed, rather than within the hot runner body 2, in a corresponding seat having a complementary design (same as the seat 9) formed in the injector nozzle body 3. In this case the arrangement of the substantially hemispherical annular member 8 would be reversed with respect to that disclosed with reference to the shown example, with its base 10 projecting towards the base of the bushing insert 5.

## Claims

1. Hot runner - injector nozzle assembly (1) for plastic material injection molds, including a hot runner body (2) and a tubular injector nozzle body (3), wherein said hot runner body (2) has a supply duct (4) of the plastic material to be injected ending in correspondence of a closure plane against which said tubular body (3) of the injector nozzle is arranged in a sealed contact fashion, **characterised in that** said closure plane is defined by the base (10) of a substantially hemispherical annular member (8) through which said hot runner body (2) and said injector nozzle body (3) are sealingly coupled with each other in an angularly orientable fashion.

2. Assembly according to claim 1, **characterised in that** said annual member (8) is housed within a seat (9) having a complementary hemispherical shape of the hot runner body (2).

3. Assembly according to claim 2, wherein said hot runner body has a bushing insert (5) through which said supply duct (4) is redirected axially with respect to the tubular body (3) of the injector nozzle, **characterised in that** said seat (9) is formed within said bushing insert (5) and said base (10) of said substantially hemispherical annular member (8) projects outside of said seat (9) towards said injector nozzle body (3).

4. Assembly according to any of the preceding claims, **characterised in that** said substantially hemispherical annular member (8) is made of metal.

5. Assembly according to any of the preceding claims, **characterised in that** said substantially hemispherical annular member (8) has a rotula-like design.
